# FASCICULE DE BREVET EUROPEEN

(11) **EP 0 366 505 B1**
(45) Date de publication et mention de la délivrance du brevet: **06.07.1994**
(21) Numéro de dépôt: 89402527.9
(22) Date de dépôt: 15.09.1989
(51) Int. Cl.: F16J 3/04, F16D 65/16, F16D 55/02

(54) **Capuchon de piston**
Kolbenschutzkappe
Piston hood

(30) Priorité: 28.10.1988 FR 8814213
(43) Date de publication de la demande: 02.05.1990
(73) Titulaire: ALLIEDSIGNAL EUROPE SERVICES TECHNIQUES, 93700 Drancy (FR)
(72) Inventeur: Le Deit, Gerard, F-93700 Drancy (FR)
(74) Mandataire: Bentz, Jean-Paul

(56) Documents cités:
- DE-A- 2 004 501
- FR-A- 2 312 696
- FR-A- 2 416 403
- US-A- 3 195 360

## Description

La présente invention concerne les capuchons de pistons, et plus particulièrement les capuchons de piston destinés à équiper les freins à disques.

De tels capuchons sont bien connus dans la technique des freins à disques, et ont pour but d'assurer l'étanchéité du cylindre du moteur de frein, afin d'éviter l'intrusion de corps étrangers ou de souillures qui pourraient venir contrarier le coulissement du piston du moteur de frein pendant une action de freinage. Classiquement, ces capuchons sont fixés d'une part sur le piston coulissant, et d'autre part sur l'étrier du frein à disque, et sont en matière souple pour pouvoir se déformer lors du mouvement du piston.

La demande de brevet FR-A-2 416 403 présente un capuchon de ce type, et conforme au préambule de la revendication 1.

Il peut arriver que, lors du montage du frein à disque, et plus particulièrement lors de l'installation du piston dans son cylindre et du capuchon d'étanchéité entre eux, une certaine quantité d'air soit enfermée entre ces deux pièces. Lors d'un freinage, il est bien connu qu'il se produit alors un dégagement de chaleur qui, s'il est communiqué au piston du moteur de frein, peut provoquer l'échauffement de cette quantité d'air, et donc sa dilatation et un accroissement de pression dans le volume délimité par la tête de piston, le cylindre et le capuchon. Le capuchon de piston, étant en matière souple, sera alors contraint de se dilater vers l'extérieur, et, si l'échauffement est important, il pourra alors se produire que le capuchon vienne au contact du support du matériau de friction, lui-même porté à une température élevée. Il y aura alors détérioration du capuchon par brûlage de celui-ci sur les zones de contact avec le support de matériau de friction, ce qui nécessite un démontage complet du frein pour changer le capuchon et rétablir l'étanchéité requise.

L'invention a donc pour objet de prévoir un capuchon de piston pour frein à disque qui, d'une part évite d'enfermer une trop grande quantité d'air dans le volume délimité par la tête de piston et le cylindre lors du montage du moteur de frein, et d'autre part permette à cet air de s'échapper hors de ce volume lors d'actions de freinage importantes amenant un échauffement général du frein.

Dans ce but, la présente invention prévoit un capuchon de piston pour frein à disque comprenant un moteur de frein constitué par un piston coulissant dans un cylindre, ce capuchon étant constitué d'une matière souple et assurant l'étanchéité entre le piston et le cylindre par l'intermédiaire d'un bourrelet situé sur sa périphérie intérieure et venant se loger dans une gorge annulaire ménagée sur la tête du piston, et d'une partie de maintien sur sa périphérie extérieure apte à venir au contact de la paroi intérieure d'un logement ménagé à l'extrémité du cylindre, cette partie de maintien comportant un insert métallique en forme de bague cylindrique, le capuchon étant caractérisé en ce qu'il comporte au moins un évent laissant échapper l'air contenu dans le volume qu'il délimite avec le piston et le cylindre et interdisant l'entrée de corps étrangers ou d'agents corrosifs dans ce volume.

L'invention sera mieux comprise à l'aide de la description qui va suivre d'un exemple d'un mode de réalisation, en référence avec les dessins annexés dans lesquels :
- La Figure 1 est une vue en coupe d'un frein à disque incorporant un capuchon selon la présente invention ;
- La Figure 2 est une vue en coupe du capuchon de l'invention dans un plan passant par son axe ;
- La Figure 3 est une vue de la partie de maintien du capuchon de l'invention dans un plan perpendiculaire à son axe et
- La Figure 4 est une vue latérale du capuchon de l'invention.

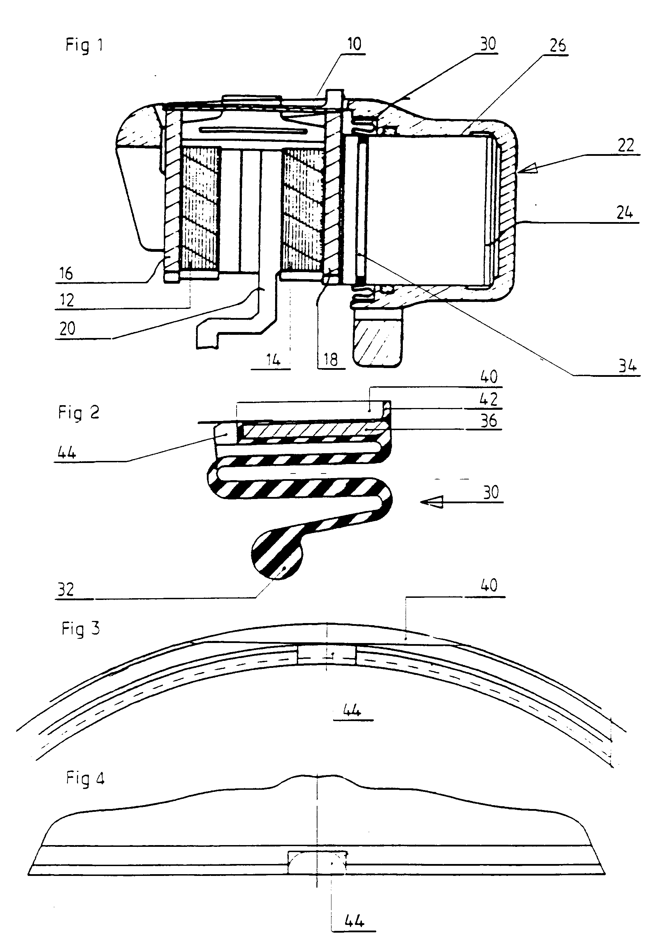

On a représenté sur la Figure 1 un frein à disque vu en coupe, du type comportant un étrier 10, deux organes de friction 12 et 14, munis respectivement de plaques de support 16 et 18, et susceptibles de venir en engagement de friction avec un disque tournant 20 lors de l'actionnement d'un moteur de frein 22. Ce moteur de frein comprend un piston 24 coulissant dans un cylindre 26 pour agir sur la plaque de support 18 de l'organe de friction 14 lors d'un freinage. Un capuchon 30 en matière souple assure l'étanchéité du cylindre du moteur pour empêcher toute intrusion de corps étrangers ou d'agents corrosifs pouvant perturber le coulissement du piston 24, il est maintenu, d'une part sur le piston 24 par un bourrelet 32 situé sur sa périphérie intérieure et venant se loger dans une gorge annulaire 34 ménagée sur la tête du piston, et d'autre part au bord de l'ouverture du cylindre 26 par sa partie périphérique extérieure constituant une partie de maintien.

La partie de maintien du capuchon 30 comporte un insert métallique 36, formant une bague cylindrique qui applique le bord extérieur du capuchon contre la paroi intérieure de son logement, constitué par un alésage de diamètre supérieur à celui du cylindre 24 et situé à l'extrémité de celui-ci. L'étanchéité est ainsi assurée de façon connue entre le piston 24 et le cylindre 26.

Conformément à l'invention, des moyens sont prévus pour assurer l'échappement de l'air qui pourrait se trouver enfermé dans le logement du capuchon lors de son montage, tout en empêchant l'intrusion de corps étrangers ou agents corrosifs dans ce logement. Ainsi, il est prévu de réaliser, dans la partie de maintien du capuchon, des amincissements localisés 40, sur la majeure partie de la hauteur de la périphérie extérieure de la partie de maintien et parallèlement à l'axe du capuchon, de façon à laisser subsister une languette 42 à l'extrémité de la partie de maintien située la plus à l'extérieur du logement du capuchon. Simultanément, l'invention prévoit de réaliser, sur le bord de la partie de maintien, destiné à venir s'appliquer au fond du logement de capuchon, et dans les zones où ont été pratiqués ces amincissements, des encoches 44.

Ainsi, lors de la mise en place du capuchon dans son logement autour du piston 24, l'air en excès dans ce logement trouvera un passage passant par les encoches 44, et l'espace situé entre les amincissements 40 de la partie de maintien du capuchon et la paroi intérieure du logement de capuchon. Si cet air est soumis à une pression excessive lors du montage ou lors d'un échauffement exagéré du frein, il pourra alors soulever la languette 42, agissant à la façon d'une soupape ou d'un évent, et s'échapper vers l'extérieur.

Par contre, le capuchon étant introduit à force dans son logement, grâce à l'insert métallique 36, la languette 42 conservera une légère inclinaison vers l'extérieur du logement. De cette façon, l'entrée dans le logement du capuchon de corps étrangers ou d'agents corrosifs sera interdite.

On comprend donc que, grâce à l'invention lors d'un échauffement du frein, l'air en excès dans le logement de capuchon pourra trouver un chemin vers l'extérieur et n'obligera plus le capuchon à se gonfler, jusqu'à venir au contact du support 18 du matériau de friction, qui pourrait le brûler et le détériorer.

Bien que les amincissements 40 aient été décrits et représentés comme des aplatissements, il est bien clair que l'on pourra leur donner la forme et l'étendue que l'on jugera utile. Il en est de même pour les encoches 44. Le nombre des amincissements 40 à la périphérie de la partie de maintien du capuchon n'est pas critique. Il devra être choisi en fonction du diamètre du piston, de façon à offrir un passage suffisant pour laisser l'air en excès s'échapper sans nuire à la rigidité de la partie de maintien

En outre, bien que l'on ait décrit des évents pratiqués à la périphérie extérieure de la partie de maintien, il est évident que l'homme du métier pourra prévoir de tels évents à la périphérie intérieure et pratiquer au moins une encoche dans le bourrelet 32 à cette fin sans sortir du cadre de l'invention.

## Revendications

1. Capuchon de piston pour frein à disque comprenant un moteur de frein constitué par un piston (24) coulissant dans un cylindre (26), ce capuchon étant constitué d'une matière souple et assurant l'étanchéité entre le piston (24) et le cylindre (26) par l'intermédiaire d'un bourrelet (32) situé sur sa périphérie intérieure et venant se loger dans une gorge annulaire (34) ménagée sur la tête du piston (24), et d'une partie de maintien sur sa périphérie extérieure apte à venir au contact de la paroi intérieure d'un logement ménagé à l'extrémité du cylindre, cette partie de maintien comportant un insert métallique (36) en forme de bague cylindrique, le capuchon étant caractérisé en ce qu'il comporte au moins un évent laissant échapper l'air contenu dans le volume qu'il délimite avec le piston (24) et le cylindre (26) et interdisant l'entrée de corps étrangers ou d'agents corrosifs dans ce volume.

2. Capuchon selon la revendication 1, caractérisé en ce que l'évent est constitué par un amincissement (40) de la partie de maintien sur la majeure partie de la hauteur de la périphérie extérieure laissant subsister une languette (42) du côté de la partie de maintien situé le plus à l'extérieur du logement.

3. Capuchon selon la revendication 2, caractérisé en ce que une encoche (44) est ménagée sur le bord de la partie de maintien destiné à venir s'appliquer au fond du logement, dans la zone où a été pratiqué l'amincissement (40).

4. Capuchon selon la revendication 1, caractérisé en ce que l'évent est constitué par une encoche pratiquée dans le dit bourrelet (32).

5. Frein à disque, caractérisé en ce que l'étanchéité entre le piston (24) et le cylindre (26) du moteur de frein est assurée par un capuchon selon l'une quelconque des revendications précédentes.

## Claims

1. Piston cap for a disc brake, comprising a brake motor consisting of a piston (24) sliding in a cylinder (26), this cap being composed of a flexible material ensuring sealing between the piston (24) and the cylinder (26) by means of a bead (32) located on its inner periphery and coming to rest in an annular groove (34) made in the head of the piston (2) and of a retention part on its outer periphery, capable of coming in contact with the inner wall of a receptacle formed at the end of the cylinder, this retention part comprising a metal insert (36) in the form of a cylindrical ring, the cap being characterized in that it possesses at least one vent allowing the air contained in the volume which it delimits with the piston (24) and the cylinder (26) to escape and preventing the entry of foreign bodies or corrosive agents into this volume.

2. Cap according to Claim 1, characterized in that the vent consists of a thinned portion (40) of the retention part over most of the height of the outer periphery, leaving a tongue (42) on that side of the retention part located furthest outside the receptacle.

3. Cap according to Claim 2, characterized in that a notch (44) is made on that edge of the retention part intended to come up against the bottom of the receptacle, in the zone where the thinned portion (40) has been formed.

4. Cap according to claim 1, characterized in that the vent consists of a notch made in said bead (32).

5. Disc brake, characterized in that the sealing between the piston (24) and the cylinder (26) of the brake motor is ensured by means of a cap according to any of the preceding claims.

## Patentansprüche

1. Kolbenkappe für eine Scheibenbremse mit einem Bremsmotor, der einen in einem Zylinder (26) gleitenden Kolben (24) enthält, wobei diese Kappe aus einem nachgiebigen Material besteht und zwischen dem Kolben (24) und dem Zylinder (26) die Dichtigkeit durch eine Dichtlippe (32) gewährleistet, die entlang dem inneren Umfang der Kappe angeordnet ist und die in einer auf dem Kopf des Kolbens (24) ausgebildeten ringförmigen Nut (34) zu liegen kommt, und durch einen Halteabschnitt auf ihrem äußeren Umfang, der geeignet ist, mit der inneren Wand einer am Ende des Zylinders ausgebildeten Aufnahme in Berührung zu kommen, wobei dieser Halteabschnitt einen Metalleinsatz (36) in Form eines zylindrischen Ringes enthält, wobei die Kappe dadurch gekennzeichnet ist, das sie wenigstens eine Entlüftungsöffnung enthält, die die Luft in dem Volumen entweichen läßt, das sie mit dem Kolben (24) und dem Zylinder (26) abgrenzt, und die den Zutritt von Fremdkörpern oder korrosiven Mitteln in dieses Volumen verhindert.

2. Kappe nach Anspruch 1, dadurch gekennzeichnet, daß die Entlüftungsöffnung durch eine Querschnittsverminderung (40) des Halteabschnittes auf dem größeren Teil der Höhe des äußeren Umfangs gebildet ist, die auf der am weitesten zum Äußeren der Aufnahme gelegenen Seite des Halteabschnittes eine Zunge (42) stehen läßt.

3. Kappe nach Anspruch 2, dadurch gekennzeichnet, daß am Rand des Halteabschnittes, der dazu vorgesehen ist, sich an den Boden der Aufnahme anzulegen, eine Kerbe (44) in dem Bereich angeordnet ist, in dem die Querschnittsverminderung (40) gebildet ist.

4. Kappe nach Anspruch 1, dadurch gekennzeichnet, daß die Entlüftungsöffnung durch eine in der Dichtlippe (32) angebrachte Kerbe gebildet ist.

5. Scheibenbremse, dadurch gekennzeichnet, daß die Dichtigkeit zwischen dem Kolben (24) und dem Zylinder (26) des Bremsmotors durch eine Kappe nach einem der vorhergehenden Ansprüche gewährleistet ist.
